# EUROPÄISCHE PATENTANMELDUNG

(11) **EP 3 744 960 A1**
(43) Veröffentlichungstag der Anmeldung: **02.12.2020**
(21) Anmeldenummer: 20173552.9
(22) Anmeldetag: 07.05.2020
(51) Int. Cl.: F02D 41/00, F02D 41/32, F02D 19/02

(54) **VERFAHREN ZUR DYNAMISCHEN GASPARTIALDRUCKKORREKTUR EINER BRENNKRAFTMASCHINE MIT ÄUSSERER GEMISCHBILDUNG**

(30) Priorität: 29.05.2019 DE 102019114472
(71) Anmelder: VOLKSWAGEN AG, 38440 Wolfsburg (DE)
(72) Erfinder: Janzen, Michael, 38442 Wolfsburg (DE); Müller, Sven, 30629 Hannover (DE); Scheller, Pierre, 38446 Wolfburg/Neuhaus (DE)
(74) Vertreter: Gulde & Partner

(57) **Zusammenfassung**

Die Erfindung betrifft ein Verfahren zum Betreiben eine Brennkraftmaschine (100), bei dem eine Gemischbildung in einem Saugrohr (100.4) stromauf des Zylinders (100.5-n) der Brennkraftmaschine (100) vorgenommen wird, und bei dem neben dem Gaspartialdruck, der in das Saugrohr (1004) kontinuierlich einströmenden Frischluft (P100.1) auch der Gaspartialdruck, des in das Saugrohr (100.4) diskontinuierlich zugeführten Kraftstoffs (P100.2) berücksichtigt wird.

Erfindungsgemäß ist vorgesehen, dass der in Abhängigkeit bestimmter Parameter (300) als stationär angenommene Gaspartialdruck (pstat) des in das Saugrohr (100.4) zugeführten Kraftstoffs für jede der zylinderindividuell zeitlich aufeinanderfolgenden in das Saugrohr (100.4) abgesetzten Einspritzungen dynamisch über einen Korrekturfaktor (60) angepasst wird, der in einem saugrohrseitigen Bilanzierungs-Zeitraster (40, Δt13) aus einem Verhältnis eines als im Bilanzierungs-Zeitraster (40, Δt13) als stationär angenommenen Füllwertes (Fₛₜₐₜ) der Frischluft und eines im Bilanzierungs-Zeitraster (40, Δt13) ermittelten Korrekturfüllwertes (F_{dyn}) der Frischluft berechnet wird, und der entsprechend des Verhältnisses der ermittelten Füllwerte (Fₛₜₐₜ, F_{dyn}) zur dynamischen Korrektur des stationären Gaspartialdruckes (pstat) verwendet wird, wodurch für jede zylinderindividuell zeitlich aufeinanderfolgende in das Saugrohr (100.4) abgesetzte Einspritzung ein dynamischer Gaspartialdruck (70, p_{dyn}) vorliegt, der als eine charakteristische Größe für die Berechnung der jeweiligen zylinderindividuellen Einspritzmenge in das Saugrohr (100.4) dient.

## Beschreibung

Die Erfindung betrifft ein Verfahren zum Betreiben eine Brennkraftmaschine, bei dem eine Gemischbildung in einem Saugrohr stromauf des Zylinders der Brennkraftmaschine vorgenommen wird, und bei dem neben dem Gaspartialdruck, der in das Saugrohr kontinuierlich einströmenden Frischluft auch der Gaspartialdruck, des in das Saugrohr diskontinuierlich zugeführten Kraftstoffs berücksichtigt wird.

Die Druckschrift DE 10 2005 047 446 A1 beschreibt ein Verfahren zum Betreiben einer Brennkraftmaschine, wobei eine charakteristische Größe für eine Absaugleistung eines Zylinders der Brennkraftmaschine ermittelt wird. Die charakteristische Größe für die Absaugleistung in Abhängigkeit des in ein Saugrohr der Brennkraftmaschine zuströmenden Massenstroms und einer Änderung des Saugrohrdruckes wird während einer Ansaugphase des Zylinders ermittelt.

Die Druckschrift DE 10 2005 055 952 A1 offenbart ein Verfahren zum Betrieb einer Brennkraftmaschine, wobei die Brennkraftmaschine ein Einlassventil, ein Auslassventil, ein Abgasrohr und ein Saugrohr aufweist, wobei das Einlassventil und das Auslassventil eine Ventilüberschneidung aufweisen und wobei Abgase von dem Abgasrohr in das Saugrohr rückgeführt werden. Es wird offenbart, dass ein Restgaspartialdruck des sich im Brennraum befindenden Restgases ermittelt wird. Ferner wird ein Luftpartialdruck, der sich zum Zeitpunkt des Schließens des Auslassventils im Brennraum befindlichen Luft in Abhängigkeit von dem Restgaspartialdruck ermittelt. Schließlich wird die Luftmasse in dem Brennraum für den Zeitpunkt, in dem das Einlassventil schließt, in Abhängigkeit von dem Luftpartialdruck ermittelt.

Zudem erläutert die Druckschrift DE 10 2008 042 819 A1 ein Verfahren, welches zum Bestimmen einer aktuellen Restgasrate in Zylindern eines Verbrennungsmotors mit Abgasrückführung dient.

Zusammenfassend wird festgehalten, dass aus dem Stand der Technik hervorgeht, dass der Restgaspartialdruck beziehungsweise der Abgas-Partialdruck als charakteristische Größe abgasseitig eines Zylinders der Brennkraftmaschine in verfahrenstechnische Betrachtungen beim Betrieb einer Brennkraftmaschine einbezogen wird.

Der Erfindung liegt die Aufgabe zugrunde, den sich ändernden Gaspartialdruck des Kraftstoffes als charakteristische Größe bei der äußeren Gemischbildung zu berücksichtigen.

Der Partialdruck in Gasen und Flüssigkeiten ist ein Teildruck eines Gases, das heißt sein Anteil am Gesamtdruck, insbesondere bei einem Gasgemisch der Partialdruck des Kraftstoffs und der Partialdruck der Frischluft.

Derzeit liegt bei der äußeren Gemischbildung in einer Brennkraftmaschine folgende Ausgangsituation vor.

Ottomotoren mit äußerer Gemischbildung weisen einen Vergaser oder ein Saugrohr auf, in dem die Einspritzung des Kraftstoffs (Saugrohreinspritzung) stattfindet. Bei der äußeren Gemischbildung wird das Gemisch außerhalb des Zylinders gebildet und verbrennt erst, wenn es im Brennraum, das heißt im Zylinder gezündet wird.

Bei positiven und negativen Lastwechseln der Brennkraftmaschine kommt es insbesondere bei äußerer Gemischbildung zu mageren (Luftüberschuss λ > 1) oder fetten (Luftmangel λ < 1) Ausflügen.

Bei einer äußeren Gemischbildung werden bereits Korrekturen vorgenommen, die jedoch immer zu spät wirken, da die jeweilige Kraftstoffmenge bereits abgesetzt wurde.

Bei den vorhandenen Systemen wird systemimmanent derart vorgegangen, dass über die Drosselklappe Frischluft kontinuierlich zufließt, jedoch der Kraftstoff intermittierend eingeblasen wird, wonach das erzeugte Gemisch ebenfalls intermittierend über die Einlassventile in die Zylinder der Brennkraftmaschine abfließt.

In der Fahrdynamik (den positiven und negativen Lastwechseln der Brennkraftmaschine) fließt somit über die Drosselklappe kontinuierlich eine veränderliche Menge Frischluft nach, sodass sich lastwechselbedingt stets der Gaspartialdruck des Kraftstoffes und der der Frischluft verändert.

Derzeit ist der Gaspartialdruck des Kraftstoffes Bestandteil der Bestimmung der Frischluftfüllung im Zylinder und wird derzeit im Bereich der äußeren Gemischbildung nicht dynamisch, das heißt lastwechselabhängig nicht korrigiert.

Insbesondere bei einem Lastwechsel wird erfindungsgemäß eine während der zeitlichen Differenz des Bilanzierungs-Zeitrasters entstandene absolute Abweichung der dynamischen Frischluftmasse, die als dynamischer Korrekturfüllwert vorliegt, gegenüber der im Bilanzierungs-Zeitraster in den Phasen des Arbeitsspiels stationär betrachteten absoluten Frischluftmasse, die als stationärer Füllwert vorliegt, mittels dem im Bilanzierungs-Zeitraster vorliegenden FrischluftMassenstrom-Gradienten ermittelt.

Dadurch kann erfindungsgemäß der Gaspartialdruck des Kraftstoffs im Saugrohr nach dem Öffnen des Einlassventils des Zylinders im Zylinder in Abhängigkeit des ermittelten Korrekturfüllwertes unter Berücksichtigung eines sogenannten Prädiktionszeitpunktes dynamisch korrigiert werden, wodurch in verbesserter Weise auch in der Dynamik kontinuierlich ein vorgegebenes stöchiometrisches Verbrennungsluftverhältnis λ im Saugrohr eingestellt und gewährleistet werden kann.

Die sogenannte Füllungs-Prädiktion ist ein Verfahren, bei dem zu einem Zeitpunkt "Einlassventil schließt", dem Prädiktionszeitpunkt unter physikalischen Randbedingungen die Luftmenge im Zylinder berechnet wird.

Als eine der physikalischen Randbedingungen wird bisher der Gaspartialdruck des Kraftstoffes "stationär" angenommen, jedoch ist der Gaspartialdruck des Kraftstoffes wie oben erläutert ist, insbesondere in der Dynamik lastwechselbedingt nicht "stationär". Auf Basis der "prädizierten" Füllung wird bereits bisher die zugehörige Kraftstoffmenge ermittelt und dem Saugrohr zugeführt. Bei der derzeit prädizierten Kraftstoff-Füllung wird über die abgasseitige Lambda-Regelung das Gemisch im Saugrohr möglichst neutral λ = 1 gehalten, damit keine Ausflüge in den fetten oder mageren Bereich auftreten, was wie zuvor erläutert in der Dynamik nur annähernd gewährleistet werden kann. Bei der derzeitigen Füllungsprädiktion wird davon ausgegangen, dass im Saugrohr eine neutrale Gemischlage vorliegt.

Die Schnittstelle beziehungsweise die dafür benutzte charakteristische Größe ist der aktuelle als stationär angenommene Gaspartialdruck des Kraftstoffes, der den sogenannten Verdrängungsfaktor des Kraftstoffs in dem Saugrohr darstellt.

Es wird somit zur Vereinfachung des derzeitigen Verfahrens eine physikalisch falsche Annahme getroffen, die dahingehend unkorrekt ist, da die Gaspartialdrücke des Kraftstoffes und der Frischluft nicht "stationär" sind, sondern sich innerhalb der Arbeitsspiele, der mit dem Saugrohr in Verbindung stehenden Zylinder dynamisch verändern. Derzeit wird, wie bereits erwähnt, auf das Problem mittels der Lambda-Regelung über Messungen im Abgastrakt reagiert, wie aus dem Stand der Technik entnommen werden kann. Bei dynamischen Vorgängen und den vorhandenen steuerungsseitigen Streckenlaufzeiten kann die Lambda-Reglung das Gemisch jedoch nicht rechtzeitig anpassen beziehungsweise ausgleichen. Zusätzlich liegt ein Nachteil darin, dass der I-Anteil des Lambda-Reglers aufzieht, wodurch gegebenenfalls eine nicht nur kurzfristige abgasverschlechternde Gemischveränderung/Gemischabweichung erzeugt wird.

Es wird somit ein Verfahren zum Betreiben einer Brennkraftmaschine gelehrt, bei dem eine Gemischbildung in einem Saugrohr stromauf der Zylinder der Brennkraftmaschine vorgenommen wird, und bei dem neben dem Gaspartialdruck, der in das Saugrohr kontinuierlich einströmenden Frischluft auch der Gaspartialdruck, des in das Saugrohr diskontinuierlich zugeführten Kraftstoffs berücksichtigt wird.

Erfindungsgemäß wird der in Abhängigkeit vorbestimmte Parameter als stationär angenommener Gaspartialdruck, des in das Saugrohr zugeführten Kraftstoffs für jede der zylinderindividuell zeitlich aufeinanderfolgenden in das Saugrohr abgesetzten Einspritzungen dynamisch über einen Korrekturfaktor angepasst.

Der Korrekturfaktor wird in einem saugrohrseitigen Bilanzierungs-Zeitraster aus einem Verhältnis eines als im Bilanzierungs-Zeitraster als stationär angenommenen Füllwertes der Frischluft und eines im Bilanzierungs-Zeitraster ermittelten Korrekturfüllwertes der Frischluft berechnet.

Der Korrekturfaktor wird entsprechend des Verhältnisses der ermittelten Füllwerte zu dynamischen Korrektur des stationären Gaspartialdruckes verwendet, wodurch für jede zylinderindividuell zeitlich aufeinanderfolgende in das Saugrohr abgesetzte Einspritzung ein dynamischer Gaspartialdruck vorliegt, der als eine charakteristische Größe für die Berechnung der jeweiligen zylinderindividuellen Einspritzmenge in das Saugrohr dient.

Bevorzugt ist vorgesehen, dass dem Saugrohr ein Bilanzraum zugeordnet wird, in dem der Massenstrom der Frischluft über eine Drosselklappe, und der Massenstrom des Kraftstoffs über eine Einspritzdüse, und der Massenstrom des Frischluft/Kraftstoff-Gemischs über ein Einlassventil bilanziert wird.

Zudem ist bevorzugt vorgesehen, dass in dem Bilanzierungs-Zeitraster fortlaufend zylinderindividuell eine zeitliche Differenz zwischen einem Zuführungsende des Kraftstoffeinspritzelementes zum Schließzeitpunkt des Kraftstoffeinspritzelementes und einem Schließzeitpunkt des jeweiligen Einlassventils der Zylinder ermittelt wird.

Anhand einer im Bilanzierungs-Zeitraster in Phasen als stationär angenommen Massenstrom-Kennlinie der Frischluft im Bilanzierungs-Zeitraster wird der stationäre Füllwert der Frischluft im Bilanzierungs-Zeitraster berechnet.

Anhand einer Gradienten-Kennlinie wird eine ein Gradient, des über die Drosselklappe kontinuierlich zufließenden Massenstroms ermittelt und in dem Bilanzierungs-Zeitraster aufintegriert, wodurch der dynamische Korrekturfüllwert der Frischluft im Bilanzierungs-Zeitraster vorliegt.

Erfindungsgemäß wird die Gesamtmenge der Frischluft, aus dem dynamischen Korrekturfüllwert und dem stationären Füllwert, mit der Gesamtmenge des stationären Füllwertes der Frischluft ins Verhältnis gesetzt, wodurch der Korrekturfaktor gebildet wird.

So ist letztlich in vorteilhafter Weise erfindungsgemäß vorgesehen, dass der stationäre Gaspartialdruck mit dem Korrekturfaktor multipliziert wird, wodurch sich ein Korrekturwert ergibt, der dem dynamischen Gaspartialdruck entspricht, der bei jeder der zylinderindividuell zeitlich aufeinanderfolgenden in das Saugrohr abgesetzten Einspritzungen berücksichtigt wird, das heißt der Korrekturwert, der unter der Berücksichtigung, dass eine Einspritzmenge im Einspritzzeitraum bereits vor dem Bilanzierungs-Zeitraster bezüglich eines Zylinders abgesetzt worden ist, findet erfindungsgemäß - fortlaufend korrigiert - stets bei der nächsten Einspritzung in das Saugrohr bezüglich eines nachfolgenden Zylinders statt.

Die Systemarchitektur zum Betreiben einer Brennkraftmaschine als Ausgangspunkt der Erfindung, bei dem eine Gemischbildung in einem Saugrohr stromauf der Zylinder der Brennkraftmaschine vorgenommen wird, und bei dem neben dem Gaspartialdruck, der in das Saugrohr kontinuierlich einströmenden Frischluft auch der Gaspartialdruck, des in das Saugrohr diskontinuierlich zugeführten Kraftstoffs berücksichtigt wird, umfasst einen ersten Baustein, in dem ein stationärer Gaspartialdruck über vorbestimmte Parameter berechnet wird.

Erfindungsgemäß ist jetzt vorgesehen, dass dem ersten Baustein weitere Bausteine zugeordnet sind, aus denen ein Korrekturfaktor hervorgeht, der nach dem erfindungsgemäßen Verfahren ermittelt, und der in einem Baustein mit dem stationären Gaspartialdruck multipliziert wird, wodurch sich als Ausgangsgröße eines fünften Bausteins ein Korrekturwert ergibt, der dem dynamischen Gaspartialdruck entspricht, der bei jeder der zylinderindividuell zeitlich aufeinanderfolgenden in das Saugrohr abgesetzten Einspritzungen berücksichtigt wird.

Vorgesehen ist eine Systemarchitektur bei der eingangsseitig des ersten Bausteins die vorbestimmten Parameter, insbesondere eine Saugrohrtemperatur, ein Splitfaktor, ein Soll-(Lambda (λ)-Wert, eine Kraftstoff-/Gas-Railtemperatur und charakteristische Werte der Qualität des Kraftstoffs zugeführt werden, wodurch ausgangsseitig des ersten Bausteins der berechnete stationäre Gaspartialdruck als Ausgangsgröße ausgegeben wird.

In bevorzugter Ausgestaltung der Erfindung ist eine Systemarchitektur vorgesehen, bei der einem zweiten Baustein als Eingangsgrößen der Kurbelwellenwinkel der Kurbelwelle zum Zeitpunkt und der Kurbelwellenwinkel zum Zeitpunkt in Abhängigkeit der das Einlassventil schließenden Einlassnockenwelle erfasst werden, und durch Differenzbildung der Kurbelwellenwinkel in einem Differenzbaustein und durch Multiplikation mit einem Umrechnungsfaktor in einem Multiplikationsbaustein in eine Zeitdifferenz als Ausgangsgröße des zweiten Bausteins umgerechnet wird.

Zudem ist erfindungsgemäß eine Systemarchitektur vorgesehen, bei der einem dritten Baustein eingangsseitig ein Massenstrom über die Drosselklappe zugeführt wird, wobei in einem Gradientenberechnungsbaustein die Gradientenberechnung des Gradienten des Drosselklappenmassenstroms im Bilanzierungs-Zeitraster erfolgt, der nachfolgend in einem Gradientenbegrenzungsbaustein und einem Tiefpassfilterbaustein nach oben und unten begrenzt sowie geglättet wird, bevor er als Ausgangsgröße einem Multiplikationsbaustein eines vierten Bausteins zugeführt wird.

Ferner ist bevorzugt erfindungsgemäß eine Systemarchitektur vorgesehen, bei der dem Multiplikationsbaustein des vierten Bausteins eingangsseitig die Zeitdifferenz als Ausgangsgröße des vierten Bausteins und der Gradient des Drosselklappenmassenstroms zugeführt wird, wobei nach der Multiplikation der dynamische Korrekturfüllwert vorliegt, der in einem Additionsbaustein mit der stationären Füllung addiert und in einem Verhältnisbaustein mit dem Füllwert ins Verhältnis gesetzt wird, wonach sich der Korrekturfaktor als Ausgangsgröße des vierten Bausteins ergibt.

Schließlich weist die Systemarchitektur für den Korrekturfaktor als Eingangsgröße einen Baustein auf, in dem der Korrekturfaktor in einem Multiplikationsbaustein mit dem stationären Gaspartialdruck als Ausgangsgröße aus dem ersten Baustein mit dem Korrekturfaktor multipliziert wird, wodurch sich der Korrekturwert ergibt.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: einen strukturellen Aufbau, der für die Erfindung wesentlichen Komponenten einer Brennkraftmaschine;
- Figur 2: zugehörig zur Figur 1 ein Diagramm zur Verdeutlichung eines zylinderindividuellen qualitativen Systemverhaltens bei einem im Ausführungsbeispiel gewählten positiven Lastwechsel; und
- Figuren 3, 4: die zugehörigen Bausteine der Systemarchitektur.

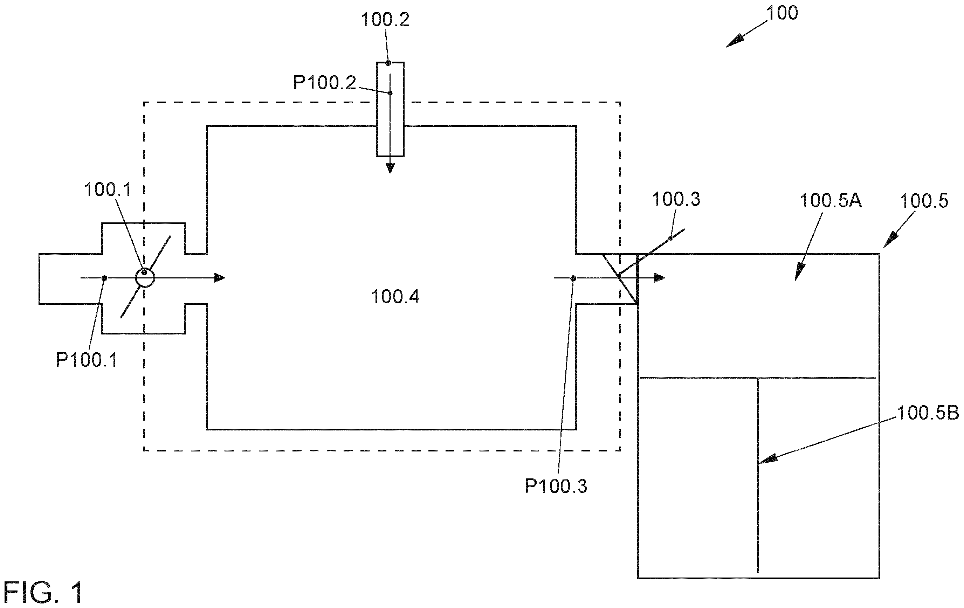

Erfindungsgemäß wird gemäß der nachfolgenden Beschreibung wie folgt vorgegangen:
Wie in Figur 1 zeigt, ist dem Saugrohr 100.4 ein gasförmig vorliegender Kraftstoff, beispielsweise Benzin oder Erdgas, zugeführt.

Die Figur 1 zeigt einen strukturellen Aufbau, der für die Erfindung wesentlichen Komponenten einer Brennkraftmaschine 100.

Zudem ist in Figur 1 ein sogenannter Bilanzraum B eingezeichnet, dessen Bedeutung noch näher erläutert wird.

Die Brennkraftmaschine 100 umfasst als erfindungswesentliche Komponenten eine Drosselklappe 100.1, eine Einspritzdüse 100.2 (nachfolgend Injektor genannt), ein Einlassventil 100.3 als Schnittstelle zwischen dem Saugrohr 100.4 und dem Zylinder 100.5 der Brennkraftmaschine 100, der in bekannter Weise den Brennraum 100.5A für das Gemisch bildet. Drosselklappe 100.1 und Injektor 100.2 sind dem Saugrohr 100.4 zugeordnet.

Anhand der in Figur 1 dargestellten Pfeile P100.1, P100.2 und P100.3 werden innerhalb des Bilanzraumes B die Massenströme über die Drosselklappe 100.1, die Einspritzdüse 100.2 und das Einlassventil 100.3 verdeutlicht, die im Bilanzraum B bilanziert werden können.

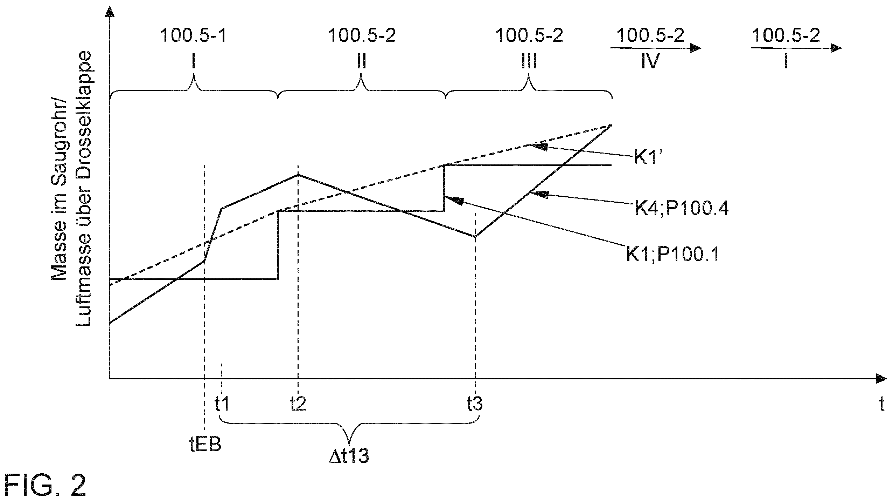

Die Figur 2 zeigt zugehörig zur Figur 1 ein Diagramm zur Verdeutlichung eines zylinderindividuellen qualitativen Systemverhaltens bei einem im Ausführungsbeispiel gewählten positiven Lastwechsel.

Auf der Y-Achse des Diagramms in Figur 2 sind unterschiedliche Massenströme über der Zeit t gemäß der X-Achse dargestellt. Auf der Y-Achse des Diagramms in Figur 2 ist einerseits der reale Gemisch-Massenstrom P100.4 über der Zeit t im Saugrohr 100.4 in der Kennlinie K4 dargestellt. Auf der Y-Achse des Diagramms in Figur 2 ist andererseits zudem der Massenstrom P100.1 über der Zeit t, der kontinuierlich zufließenden Frischluft über die Drosselklappe 100.1 in der Kennlinie K1 dargestellt.

Es wird deutlich (vergleiche Kennlinie K1), dass die kontinuierlich zufließende Frischluft über die Drosselklappe 100.1 in den dargestellten Phasen I, II, III als stationär angenommen wird.

Innerhalb der Kurbelwinkelintervalle der Phasen I, II, III, IV wird mittels eines kurbelwinkelsynchronen Rechenrasters der stationäre Frischluftmassenstrom zumeist durch Mittelwertbildung gemäß der Kennlinie K1 errechnet.

Dadurch kann über der Zeit bei einem stationären Massenstrom mit Frischluftfüllungen pro Ansaugung (vergleiche Ansaugphase II in die jeweiligen Zylinder 100.5-n) gerechnet werden.

Erfindungsgemäß wird ein zeitlich definiertes Kurbelwinkelintervall als Bilanzierungs-Zeitraster Δt13 als Grundlage für das nachfolgende Verfahren verwendet, wie nachfolgend noch weiter erläutert wird.

Außerdem ist auf der Y-Achse des Diagramms in Figur 2 der Massenstromgradient 50 der Drosselkappe 100.1 gemäß der Kennlinie K1' dargestellt, der zeitlich dem Bilanzierungs-Zeitrasters im Zeitintervall Δt13 zugeordnet werden kann.

Auf der x-Zeitachse des Diagramms in Figur 2 sind die für die Erfindung wesentliche Zeitpunkte tEB, t1, t2 und t3 zylinderindividuell in den Phasen I, II, III (Arbeitsphase IV nicht dargestellt) eines Arbeitsspieles eines von mehreren Zylindern 100.5-n definiert.

Die Ausstoßphase eines vorhergehenden Zylinders 100.5-4 ist mit I, die Ansaugphase eines ersten Zylinders 100.5-1 ist mit II und die Verdichtungsphase des ersten Zylinders 100.5-1 ist mit III gekennzeichnet.

In der Ausstoßphase I des vorhergehenden Zylinders 100.5-4 findet im Saugrohr 100.4 bereits die Zuführung des Kraftstoffs über den Injektor 100.2 (vergleiche Massenstrompfeil P100.2 in Figur 1) bezüglich des ersten Zylinders 100.5-2 statt.

Der Zeitpunkt tEB in Figur 2 definiert den Beginn t1 der Zuführung des Kraftstoffs in das Saugrohr 100.4 bezüglich des ersten Zylinders 100.5-1, während der Zeitpunkt t1 das Ende der Zuführung des Kraftstoffs in das Saugrohr 100.4 bezüglich des ersten Zylinders 100.5-1 innerhalb der Ausstoßphase I des vorhergehenden Zylinders 100.5-4 definiert.

Der Zeitpunkt t2 definiert den Zeitpunkt, in dem das Einlassventil 100.3 während der Ansaugphase II des Kolbens 100.5B des ersten Zylinders 100.5-2 öffnet.

Der Zeitpunkt t3 definiert den Zeitpunkt, in dem das Einlassventil 100.3 während der Verdichtungsphase III des Kolbens 100.5B des ersten Zylinders 100.5-1 schließt.

Der Zeitpunkt t3 ist innerhalb des Verfahrens der Prädiktionszeitpunkt, das heißt das Einlassventil 100.3 des ersten Zylinders 100.5-1 schließt.

Unter Berücksichtigung des dynamischen Korrekturfüllwertes F_{dyn} im Bilanzierungs-Zeitraster 40, Δt13 wird die Einspritzmenge im Einspritzzeitraum (tEB bis t1) der nächsten Einspritzung in das Saugrohr 100.4 bezüglich des dem ersten Zylinder nachfolgenden zweiten Zylinders 100.5-2 dynamisch korrigiert, sodass eine dynamische Korrektur des Gaspartialdrucks über das Verhältnis der stationären Füllmenge Fₛₜₐₜ über den Massenstromgradienten 50 ermittelten absoluten Frischluftmassenabweichung im Bilanzierungs-Zeitraster Δt13 ermittelt wird.

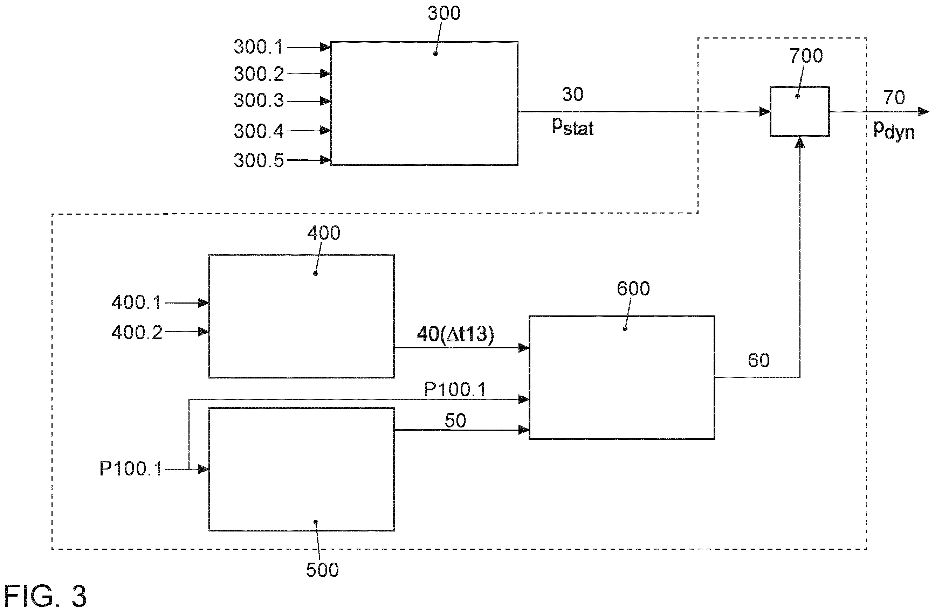

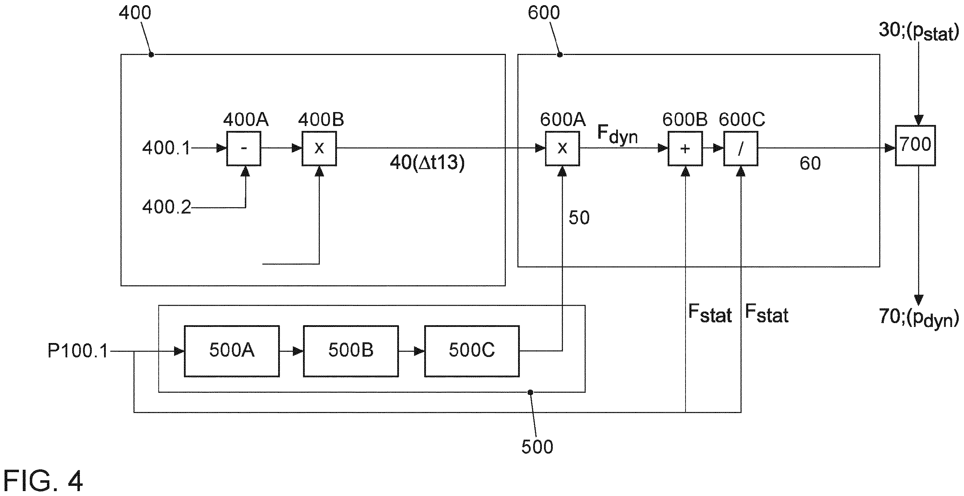

Anhand der Figuren 1 und 2 sowie der nachfolgenden Figuren 3 und 4 wird nachfolgend die Systemarchitektur der erfindungsgemäßen Lösung erläutert.

Die Figuren 3 und 4 zeigen die zugehörigen Bausteine der Systemarchitektur.

Bisher wird (vergleiche Figur 3) bereits in der vorhandenen Systemarchitektur in einem ersten Baustein 300 eine stationäre Gaspartialdruckberechnung des Kraftstoffs vorgenommen, bei der jedoch keine dynamische Korrekturen berücksichtigt werden.

Als Eingangsgrößen gehen in die Berechnung des stationären Gaspartialdrucks des Kraftstoffs eine Saugrohrtemperatur 300.1, ein Splitfaktor zwischen Benzin und Gas 300.2, ein Soll-Lambda (λ)-Wert 300.3, eine Kraftstoff-/Gas-Railtemperatur 300.4 und charakteristische Werte der Qualität 300.5 in die Berechnung ein. Als Ausgangsgröße des Bausteins 300 steht somit der stationäre Gaspartialdruck 30 des Kraftstoffs im Saugrohr 100.4 zur Verfügung.

Erfindungsgemäß wird nunmehr berücksichtigt, dass der Gaspartialdruck in der Dynamik eben nicht stationär, sondern veränderlich "dynamisch" ist.

Erfindungsgemäß wird zunächst die zeitliche Differenz Δt13 in dem Bilanzierungs-Zeitraster zwischen Zuführungsende tEB des zuletzt zum Zeitpunkt t1 zugeführten Kraftstoffs in das Saugrohr 100.4 in der Ausstoßphase I (vergleiche Figur 2) des vorgehenden Zylinders100.5-4 und dem Zeitpunkt t3 in der Verdichtungsphase III des nachfolgenden Zylinders 100.5-1 ermittelt, in dem das Einlassventil 100.3 des Zylinders 100.5 schließt.

Es versteht sich, dass die zeitliche Differenz Δt13 in Abhängigkeit der abgegebenen Leistung der Brennkraftmaschine variiert.

In dieser Zeitdifferenz Δt13 kann über die Drosselklappe 100.1 in der Dynamik bei dem beispielhaft beschriebenen positiven Lastwechsel mehr Frischluft (gegebenenfalls zu mageres Gemisch), bei negativem Lastwechsel weniger Frischluft (gegebenenfalls zu fettes Gemisch) fließen. Bei bereits zuvor fest abgesetzter Kraftstoffmenge, die in Figur 2 zwischen dem Zuführungsbeginn des Kraftstoffs zum Zeitpunkt tEB bis zum Zuführungsende zum Zeitpunkt t1 in das Saugrohr 100.4 eingebracht wird, verändert sich die Gemischlage im Saugrohr 100.4 dynamisch bis das Einlassventil des Zylinders 100.5-1 schließt.

Erfindungsgemäß wird der Massenstromgradient 50 über die Drosselkappe 100.1 gemäß der Kennlinie K1' in Figur 2 zur Frischluftbestimmung im Bilanzierungs-Zeitraster Δt13 in das Korrekturverfahren einbezogen.

Über den Frischluftmassenstromgradienten 50 gemäß der Kennlinie K1', wird über die zuvor ermittelte zeitliche Differenz Δt13 zwischen dem Zeitpunkt t1 und dem Zeitpunkt t3 in Zeitschritten innerhalb des Bilanzierungs-Zeitrasters Δt13 der dynamische Korrekturfüllwert F_{dyn} berechnet.

Der dynamische Korrekturfüllwert F_{dyn} wird zur stationär im Bilanzierungs-Zeitrasters Δt13 vorliegenden Füllwert Fₛₜₐₜ gemäß dem Massenstrom P100.1 über die Drosselklappe 100.1 gemäß der Kennlinie K1 in Figur 2 addiert und zu dem im Bilanzierungs-Zeitraster vorliegenden absoluten Füllwert Fₛₜₐₜ ins Verhältnis gesetzt.

Daraus ergibt sich erfindungsgemäß im Bilanzierungs-Zeitraster Δt13 eine prozentuale Änderung der Füllung im Saugrohr 100.4, die erfindungsgemäß als Korrekturfaktor 60 zur dynamischen Füllungskorrektur der Frischluftfüllung eingesetzt wird.

Dieser Korrekturfaktor 60 der sogenannten dynamischen Füllungskorrektur der Frischluftfüllung im Saugrohr 100.4, wird mit dem stationären Gaspartialdruck pₛₜₐₜ multipliziert, und der dadurch ermittelte dynamische Gaspartialdruck p_{dyn}, wird als "dynamisch korrigierter" Partialdruck p_{dyn} als Ausgangsgröße 70 bei der Berechnung der Einspritzmenge des Kraftstoffs bei dem nächsten Einspritzevent (tEB bis t1) in das Saugrohr 100.4 bezüglich des nächsten Zylinders 100.5-2 berücksichtigt.

Das heißt, der derart "dynamisch korrigierte" Gaspartialdruck p_{dyn} wird stets vor jeder erneuten Einspritzung in das Saugrohr 100.4 durch die dynamische Füllungskorrektur der Füllungen (stationärer Füllwert Fₛₜₐₜ und dynamischer Korrekturfüllwert F_{dyn}) mittels des in dem vorhergehenden Arbeitsspiel ermittelten Korrekturwertes 70 korrigiert.

Zur Bestimmung des Korrekturwertes 70 werden gemäß Figur 3 innerhalb der Systemarchitektur ein zweiter Baustein 400, ein dritter Baustein 500 sowie ein vierter Baustein 600 und ein fünfter Baustein 700 eingesetzt.

Im zweiten Baustein 400 (vergleiche Figur 3) werden als Eingangsgrößen der Kurbelwellenwinkel 400.1 der Kurbelwelle zum Zeitpunkt t1 und der Kurbelwellenwinkel 400.2 in Abhängigkeit der das Einlassventil 100.3 schließenden Einlassnockenwelle erfasst, und im Baustein 400 (vergleiche Figur 4) durch Differenzbildung der Kurbelwellenwinkel 400.1 und 400.2 in einem Differenzbaustein 400A und durch Multiplikation mit einem Umrechnungsfaktor im Multiplikationsbaustein 400B in die Zeitdifferenz Δt13 umgerechnet, sodass als Ausgangsgröße 40 des zweiten Bausteins 400, die der Zeitdifferenz Δt13 mithin dem Bilanzierungs-Zeitraster entspricht, vorliegt.

Im dritten Baustein 500 (vergleiche Figur 3) wird als Eingangsgröße der Massenstrom P100.1 über der Zeit t, der kontinuierlich zufließenden Frischluft über die Drosselklappe 100.1 gemäß der Kennlinie K1 erfasst, aus dem als Ausgangsgröße 50 der Gradient des Drosselklappenmassenstroms der Drosselklappe 100.1 gemäß der Kennlinie K1' gemäß Figur 2 berechnet wird.

Die Gradientenberechnung erfolgt in einem Gradientenberechnungsbaustein 500A (vergleiche Figur 4), wobei der Gradient des Drosselklappenmassenstroms im Bilanzierungs-Zeitraster Δt13 gemäß Baustein 400 bevor er einem Multiplikationsbaustein 600A im Baustein 600 zugeführt wird, in einem Gradientenbegrenzungsbaustein 500B (vergleiche Figur 4) und einem Tiefpassfilterbaustein 500C (vergleiche Figur 4) nach oben und unten begrenzt sowie geglättet wird.

Im Multiplikationsbaustein 600A liegt nach der Multiplikation der dynamische Korrekturfüllwert F_{dyn} vor. In einem Additionsbaustein 600B wird die dynamische Füllung mit der stationären Füllung addiert und in einem Verhältnisbaustein 600C mit dem Füllwert Fₛₜₐₜ ins Verhältnis gesetzt, wonach sich der Korrekturfaktor 60 als Ausgangsgröße ergibt.

Der Korrekturfaktor 60 stellt die Eingangsgröße für den fünften Baustein 700 dar, in dem der Korrekturfaktor 60 im sogenannten Multiplikationsbaustein 700 mit dem stationären Gaspartialdruck pₛₜₐₜ als Ausgangsgröße aus dem ersten Baustein 300 mit dem Korrekturfaktor 60 multipliziert wird, wodurch sich der errechnete Korrekturwert 70 ergibt, der dem dynamischen Gaspartialdruck p_{dyn} entspricht, der bei einem nächsten Einspritzevent in das Saugrohr 100.4 zur Berechnung der Einspritzmenge berücksichtigt wird.

### Bezugszeichenliste

- 100: Brennkraftmaschine
- 100.1: Drosselklappe
- 100.2: Einspritzdüse/Injektor
- 100.3: Einlassventil
- 100.4: Saugrohr
- 100.5: Zylinder
- 100.5A: Brennraum
- 100.5B: Zylinderkolben
- P100.1: Massenstrom über die Drosselklappe 100.1
- Fₛₜₐₜ: stationär berechnete absolute Frischluftmasse im Bilanz-Zeitraum Δt13
- P100.2: Massenstrom über Einspritzdüse 100.2
- P100.3: Massenstrom über Einlassventil 100.3
- K1: Kennlinie des Massenstromverlaufs der Frischluft
- K1': Kennlinie des Massenstromgradienten der Frischluft
- K4: Kennlinie des Massenstromverlauf des Frischluft/Kraftstoffs-Gemischs 100.4
- t1: Zeitpunkt Ende Kraftstoffzuführung
- t2: Zeitpunkt Einlassventil 100.3 öffnet
- t3: Zeitpunkt Einlassventil 100.3 schließt
- tEB: Zeitpunkt Beginn Kraftstoffzuführung
- Δt13: Bilanzierungs-Zeitraster
- I: Ausstoßphase
- II: Ansaugphase
- III: Verdichtungsphase
- IV: Arbeitsphase
- 300: Baustein
- 300.1: Saugrohrtemperatur
- 300.2: Splitfaktor
- 300.3: Soll-Lambda
- 300.4: Gasrailtemperatur
- 300.5: Gasqualität
- 30: Ausgangsgröße aus Baustein 300 stationärer Gaspartialdruck
- Δt13: Zeitdifferenz
- x: Frischluftmasse
- 400: Baustein
- 400A: Differenzbaustein
- 400B: Multiplikationsbaustein
- 400.1: Kurbelwellenwinkel
- 400.2: Kurbelwellenwinkel
- 40: Ausgangsgröße aus Baustein 400
- 500: Baustein
- 500A: Gradientenberechnungsbaustein
- 500B: Gradientenbegrenzungsbaustein
- 500C: Tiefpassfilterbaustein
- 50: Ausgangsgröße aus Baustein 500
- 600: Baustein
- 600A: Multiplikationsbaustein
- 600B: Additionsbaustein
- F_{dyn}: dynamisch berechneter Korrekturfüllwert als absolute Frischluftmasse im Bilanz-Zeitraum Δt13 (entspricht Frischluftmengenabweichung vom Füllwert Fₛₜₐₜ)
- 60: Korrekturfaktor aus Baustein 600
- 700: Baustein
- 70: Ausgangsgröße aus Baustein 700
- pₛₜₐₜ: statischer Gaspartialdruck des Kraftstoffs
- p_{dyn}: dynamischer Gaspartialdruck des Kraftstoffs
- B: Bilanzraum

## Patentansprüche

1. Verfahren zum Betreiben eine Brennkraftmaschine (100), bei dem eine Gemischbildung in einem Saugrohr (100.4) stromauf des Zylinders (100.5-n) der Brennkraftmaschine (100) vorgenommen wird, und bei dem neben dem Gaspartialdruck, der in das Saugrohr (1004) kontinuierlich einströmenden Frischluft (P100.1) auch der Gaspartialdruck, des in das Saugrohr (100.4) diskontinuierlich zugeführten Kraftstoffs (P100.2) berücksichtigt wird,
**dadurch gekennzeichnet, dass** der in Abhängigkeit vorbestimmte Parameter (300) als stationär angenommene Gaspartialdruck (pₛₜₐₜ), des in das Saugrohr (100.4) zugeführten Kraftstoffs für jede der zylinderindividuell zeitlich aufeinanderfolgenden in das Saugrohr (100.4) abgesetzten Einspritzungen dynamisch über einen Korrekturfaktor (60) angepasst wird, der in einem saugrohrseitigen Bilanzierungs-Zeitraster (40, Δt13) aus einem Verhältnis eines als im Bilanzierungs-Zeitraster (40, Δt13) als stationär angenommenen Füllwertes (Fₛₜₐₜ) der Frischluft und eines im Bilanzierungs-Zeitraster (40, Δt13) ermittelten Korrekturfüllwertes (F_{dyn}) der Frischluft berechnet wird, und der entsprechend des Verhältnisses der ermittelten Füllwerte (Fₛₜₐₜ, F_{dyn}) zur dynamischen Korrektur des stationären Gaspartialdruckes (pₛₜₐₜ) verwendet wird, wodurch für jede zylinderindividuell zeitlich aufeinanderfolgende in das Saugrohr (100.4) abgesetzte Einspritzung ein dynamischer Gaspartialdruck (70, p_{dyn}) vorliegt, der als eine charakteristische Größe für die Berechnung der jeweiligen zylinderindividuellen Einspritzmenge in das Saugrohr (100.4) dient.

2. Verfahren nach Anspruch 1, **dadurch gekennzeichnet, dass** dem Saugrohr (10.4) ein Bilanzraum (B) zugeordnet wird, in dem der Massenstrom (P100.1) der Frischluft über eine Drosselklappe (100.1), und der Massenstrom (P100.2) des Kraftstoffs über eine Einspritzdüse 100.2, und der Massenstrom (P100.3) des Frischluft/Kraftstoff-Gemischs über ein Einlassventil (100.3) bilanziert wird.

3. Verfahren nach Anspruch 2, **dadurch gekennzeichnet, dass** in dem Bilanzierungs-Zeitraster (40, Δt13) fortlaufend zylinderindividuell eine zeitliche Differenz (Δt13) zwischen einem Zuführungsende (t1) des Kraftstoffeinspritzelementes (100.2) zum Schließzeitpunkt des Kraftstoffeinspritzelementes (100.2) und einem Schließzeitpunkt (t3) des jeweiligen Einlassventils (100.3) der Zylinder (100.5-n) ermittelt wird.

4. Verfahren nach Anspruch 3, **dadurch gekennzeichnet, dass** anhand einer im Bilanzierungs-Zeitraster (40, Δt13) in den Phasen (I, II, III, IV) als stationär angenommene Massenstrom-Kennlinie (K1) der Frischluft im Bilanzierungs-Zeitraster (40, Δt13) der stationäre Füllwert (Fₛₜₐₜ) der Frischluft im Bilanzierungs-Zeitraster (40, Δt13) berechnet wird.

5. Verfahren nach Anspruch 3, **dadurch gekennzeichnet, dass** anhand einer Gradienten-Kennlinie (K1') ein Gradient des über die Drosselklappe (100.1) kontinuierlich zufließenden Massenstroms (P100.1) ermittelt und in dem Bilanzierungs-Zeitraster (40, Δt13) integriert und somit der dynamische Korrekturfüllwert (F_{dyn}) der Frischluft im Bilanzierungs-Zeitraster (40, Δt13) berechnet wird.

6. Verfahren nach den Ansprüchen 4 und 5, **dadurch gekennzeichnet, dass** die Gesamtmenge der Frischluft aus dem dynamischen Korrekturfüllwert (F_{dyn}) und dem stationären Füllwert (Fₛₜₐₜ), mit der Gesamtmenge des stationären Füllwertes (Fₛₜₐₜ) der Frischluft ins Verhältnis gesetzt wird, wodurch der Korrekturfaktor (60) gebildet wird.

7. Verfahren nach den Ansprüchen 1 und 6, **dadurch gekennzeichnet, dass** der stationäre Gaspartialdruck (30, pₛₜₐₜ) mit dem Korrekturfaktor (60) multipliziert wird, wodurch sich ein Korrekturwert (70) ergibt, der dem dynamischen Gaspartialdruck (p_{dyn}) entspricht, der bei jeder der zylinderindividuell zeitlich aufeinanderfolgenden in das Saugrohr (100.4) abgesetzten Einspritzungen berücksichtigt wird.

8. Verfahren nach Anspruch 7, **dadurch gekennzeichnet, dass** der Korrekturwert (70) unter Berücksichtigung, die Einspritzmenge, die im Einspritzzeitraum (tEB-t1) bereits vor dem Bilanzierungs-Zeitraster (40, Δt13) bezüglich eines Zylinders (100.5-n) abgesetzt worden ist, bei der nächsten Einspritzung in das Saugrohr (100.4) berücksichtigt wird, die bezüglich eines nachfolgenden Zylinders (100.5-n+1) stattfindet.

9. Systemarchitektur zum Betreiben einer Brennkraftmaschine (100), bei dem eine Gemischbildung in einem Saugrohr (100.4) stromauf des Zylinders (100.5-n) der Brennkraftmaschine (100) vorgenommen wird, und bei dem neben dem Gaspartialdruck, der in das Saugrohr (1004) kontinuierlich einströmenden Frischluft (P.100.1) auch der Gaspartialdruck des in das Saugrohr (100.4) diskontinuierlich zugeführten Kraftstoffs (P100.2) berücksichtigt wird, wobei die Systemarchitektur einen Baustein (300) umfasst, in dem ein stationärer Gaspartialdruck (pₛₜₐₜ) über vorbestimmte Parameter berechnet wird, **dadurch gekennzeichnet, dass** dem Baustein (300) weitere Bausteine (400, 500, 600) zugeordnet sind, aus denen ein Korrekturfaktor (60) hervorgeht, der nach dem Verfahren nach mindestens einem der Ansprüche 1 bis 8 ermittelt und der in einem Baustein (700) mit dem stationären Gaspartialdruck (30, pₛₜₐₜ) multipliziert wird, wodurch sich als Ausgangsgröße des Bausteins (700) ein Korrekturwert (70) ergibt, der dem dynamischen Gaspartialdruck (p_{dyn}) entspricht, der bei jeder der zylinderindividuell zeitlich aufeinanderfolgenden in das Saugrohr (100.4) abgesetzten Einspritzungen berücksichtigt wird.

10. Systemarchitektur nach Anspruch 9, **dadurch gekennzeichnet, dass** eingangsseitig des Bausteins (300) die vorbestimmten Parameter, insbesondere eine Saugrohrtemperatur (300.1), ein Splitfaktor (300.2), ein Soll-Lambda (λ)-Wert (300.3), eine Kraftstoff-/GasRailtemperatur (300.4) und charakteristische Werte der Qualität (300.5) des Kraftstoffs zugeführt werden, wodurch ausgangsseitig des Bausteins (300) der berechnete stationäre Gaspartialdruck (pₛₜₐₜ) als Ausgangsgröße (30) ausgegeben wird.

11. Systemarchitektur nach Anspruch 9, **dadurch gekennzeichnet, dass** im Baustein (400) als Eingangsgrößen der Kurbelwellenwinkel (400.1) der Kurbelwelle zum Zeitpunkt (t1) und der Kurbelwellenwinkel (400.2) zum Zeitpunkt (t3) in Abhängigkeit der das Einlassventil (100.3) schließenden Einlassnockenwelle erfasst werden, und durch Differenzbildung der Kurbelwellenwinkel (400.1) und (400.2) in einem Differenzbaustein (400A) und durch Multiplikation mit einem Umrechnungsfaktor in einem Multiplikationsbaustein (400B) in eine Zeitdifferenz (Δt13) als Ausgangsgröße (40) des Baustein (400) umgerechnet wird.

12. Systemarchitektur nach Anspruch 9, **dadurch gekennzeichnet, dass** dem Baustein (500) eingangsseitig ein Massenstrom (P100.1) über die Drosselklappe (100.1) zugeführt wird, wobei in einem Gradientenberechnungsbaustein (500A) die Gradientenberechnung des Gradienten des Drosselklappenmassenstroms (P100.1) im Bilanzierungs-Zeitraster (40, Δt13) erfolgt, der nachfolgend in einem Gradientenbegrenzungsbaustein (500B) und einem Tiefpassfilterbaustein (500C) nach oben und unten begrenzt sowie geglättet wird, bevor er als Ausgangsgröße (50) einem Multiplikationsbaustein (600A) im Baustein (600) zugeführt wird.

13. Systemarchitektur nach den Ansprüchen 11 und 12, **dadurch gekennzeichnet, dass** dem Multiplikationsbaustein (600A) des Bausteins (600) eingangsseitig die Zeitdifferenz (Δt13) als Ausgangsgröße (40) des Bausteins (400) und der Gradient des Drosselklappenmassenstroms zugeführt wird, wobei nach der Multiplikation der dynamische Korrekturfüllwert (F_{dyn}) vorliegt, der in einem Additionsbaustein (600B) mit der stationären Füllung (Fₛₜₐₜ) addiert und in einem Verhältnisbaustein (600C) mit dem Füllwert (Fₛₜₐₜ) ins Verhältnis gesetzt wird, wonach sich der Korrekturfaktor (60) als Ausgangsgröße des Bausteins (600) ergibt.

14. Systemarchitektur nach den Ansprüchen 9 und 13, **dadurch gekennzeichnet, dass** der Korrekturfaktor (60) die Eingangsgröße für den Baustein (700) ist, wobei der Korrekturfaktor (60) in dem Baustein (700) mit dem stationären Gaspartialdruck (pₛₜₐₜ) als Ausgangsgröße (30) aus dem Baustein (300) mit dem Korrekturfaktor (60) multipliziert wird, wodurch sich der Korrekturwert (70) ergibt.
